# EUROPÄISCHE PATENTANMELDUNG

(11) **EP 2 011 628 A1**
(43) Veröffentlichungstag der Anmeldung: **07.01.2009**
(21) Anmeldenummer: 08011687.4
(22) Anmeldetag: 27.06.2008
(51) Int. Cl.: B29C 59/14, B29C 65/02, C08J 5/12, C08J 3/28, B32B 27/16, B29K 27/00

(54) **Verfahren zum Herstellen eines Verbundes aus mehreren Körpern und damit hergestellte Verbundkörper**

(30) Priorität: 02.07.2007 DE 102007030648
(71) Anmelder: Boehringer Ingelheim microParts GmbH, 44227 Dortmund (DE)
(72) Erfinder: Ohl, Andreas, 17440 Hohendorf (DE); Schröder, Karsten, 17489 Greifswald (DE); Besch, Wilfried, 17493 Greifswald (DE); Lippold, Oliver, 58507 Lüdenscheid (DE); Reinecke, Holger, 79312 Emmendingen (DE)

(57) **Zusammenfassung**

Mit dem erfindungsgemäßen Verfahren werden kleberfreie Verbindungen zweier oder mehrerer Körper aus miteinander unverträglichen - inkompatiblen - Polymeren hergestellt, wobei mindestens ein Körper aus einem (teil)halogenierten Polymer besteht. Die Verbindungsfläche mindestens eines der zu verbindenden Körper wird einem elektrischen Plasma ausgesetzt und vor dem Verbinden der Körper mit einer Flüssigkeit besprüht. Der Verbundkörper aus miteinander unverträglichen Polymeren hat in der Verbindungsfläche eine erhöhte Haftfestigkeit.

Der Verbundkörper umfasst mehrere Schichten, von denen mindestens eine Schicht eine Aussparung enthält, die im Verbundkörper eine Kammer bildet. Der mikrostrukturierte Verbundkörper ist für mikrochemische und mikrobiologische Untersuchungen geeignet. In der Kammer kann eine Zellkultur angelegt und verschiedenen Flüssigkeiten ausgesetzt werden. Das Verhalten der Zellkultur kann beobachtet werden.

## Beschreibung

Die Erfindung betrifft ein Verfahren zum Herstellen eines Verbundes aus mindestens zwei Körpern aus Kunststoffen, von denen mindestens ein Körper aus einem halogenierten Polymer besteht. Das Polymer kann vollständig oder teilweise halogeniert sein. Das Halogen kann Fluor, Chlor oder Brom sein. Die Verbundkörper können aus zwei oder aus mehreren miteinander unverträglichen - inkompatiblen - Polymeren bestehen. Die mindestens zwei Körper sind flächenartig miteinander verbunden und ohne ein stoffliches Hilfsmittel, wie Kleber oder Haftvermittler, kraft- und formschlüssig gefügt.

Die Erfindung bezweckt, einige Eigenschaften derartiger Verbundkörper zu verbessern, damit solche Körper in weiteren Gebieten eingesetzt werden können.

Für das Verbinden von Körpern aus beliebigen, chemisch gleichartigen oder unterschiedlichen Kunststoffen miteinander sind im Allgemeinen spezielle, auf die jeweilige Materialkombination abgestimmte Klebstoffe erforderlich, um praktikable Festigkeiten der Verbindung zu erhalten. Für Verbindungen, bei denen es auf große Präzision ankommt, zum Beispiel bei Fügungen von Mikrostrukturbauteilen und Folien-Laminaten oder bei Verbindungen, bei denen die chemische Beschaffenheit der Klebstoffe sich auf die Funktion der verbundenen Bauelemente auswirken kann, zum Beispiel bei biomedizinischen Bauelementen, mikrofluidischen und analytischen Systemen, ist es erforderlich, ohne Klebstoffe auszukommen.

In bestimmten Fällen lassen sich Verbindungen von Kunststoffen allein mit Hilfe von Wärme, Druck und/oder Lösemitteln herstellen, also ohne Verwendung eines Klebers. Dabei handelt es sich im Allgemeinen um Verbindungen von gleichartigen oder miteinander mischbaren Polymeren. Bei den bekannten kleberfreien Verbindungstechniken können nur miteinander verträgliche und miteinander mischbare gleiche oder sehr ähnliche Kunststoffe stoffschlüssig und haftfest miteinander verbunden werden. Bei inkompatiblen Kunststoffen, also bei miteinander unverträglichen und miteinander nicht mischbaren Kunststoffen, wird keine ausreichende Haftfestigkeit der Verbindung erreicht. Dieses Verhalten ist begründet in der aus phänomenologischen Untersuchungen bekannten Unverträglichkeit unterschiedlicher Polymere.

Bei Verbindungen mit (teil)fluorierten Polymeren wie Polytetrafluorethylen (PTFE, Teflon), Poly(hexafluorethylen-co-hexafluorpropylen) (FEP), Perfluor-alkoxy-Polymeren (PFA), Vinylidenfluorid-Copolymeren (z.B. Viton) wird die Unverträglichkeit von Polymeren besonders deutlich.

Bei einem Verbund aus Kunststoffen kann die Haftkraft durch Hilfsmittel, zum Beispiel Primer, die die Kunststoffe chemisch aktivieren und reaktive Gruppen erzeugen, in Kombination mit kurzkettigen Klebstoffen erhöht werden. Erfahrungsgemäß werden Klebstoffe in Schichtdicken von 100 Nanometer bis 10 Mikrometer, typischerweise von einigen Mikrometern, eingesetzt.

Kleberfreie Verbindungen von Kunststoffen können mit Hilfe von Wärme und mechanischen Kräften (zum Beispiel Zusammenpressen, Reibung, Ultraschall) hergestellt werden. Die unter dem Oberbegriff "Kunststoffschweißen" zusammenfassbaren Verfahren eignen sich zum stoffschlüssigen Verbinden von Körpern aus vielen Kunststoff Kombinationen, nicht jedoch für Kombinationen miteinander unverträglicher Polymere.

Weiter sind Verfahren bekannt, die über die alleinige Anwendung mechanischer Energie und Wärmeenergie hinausgehen. Bei Diagnostiksystemen aus Silikon ist zum Fügen von Körpern aus Silikon oder aus anderen auf Silizium basierenden Materialien eine oxidierende Plasmabehandlung bekannt. Dieses Verfahren lässt sich auf Mikrochips aus Kunststoffen übertragen, die nach Aktivierung in einem Sauerstoff-Plasma kleberfrei gebondet werden.

Bei den bekannten kleberfreien Verbindungstechniken können nur miteinander kompatible, also miteinander verträgliche oder miteinander mischbare gleiche oder ähnliche Kunststoffe stoffschlüssig und haftfest miteinander verbunden werden. Bei inkompatiblen Kunststoffen, also bei miteinander unverträglichen oder miteinander nicht mischbaren Kunststoffen wird keine ausreichende Haftfestigkeit der Verbindung erreicht. Dieses Verhalten ist begründet in der aus phänomenologischen Untersuchungen bekannten Unverträglichkeit unterschiedlicher Polymere.

Die Oberflächenaktivierung von Polymeren vor dem kleberfreien Verbinden von Kunststoffen wird in der Literatur beschrieben, zum Beispiel für Gummiverbünde (JP-2003 181 984), zum Laminieren von Folien (DE - 1 981 068) und zum Verbinden von Polymerfolien mit Mikrostrukturen.

Nach WO - 02 / 090 112 werden zwei Polymerfolien, die Mikrostrukturen oder Netzwerke von Mikrostrukturen enthalten, kleberfrei miteinander verbunden. Die Oberfläche eines oder beider der miteinander zu verbindenden Körper wird in einer Stufe mit einem Plasma behandelt. Damit werden mikroanalytische Geräte für die biologische und/oder chemische analytische Anwendungen erhalten. Typischerweise werden zwei PET-Folien miteinander verbunden. In allen Fällen werden Körper aus miteinander verträglichen - kompatiblen - Polymeren miteinander verbunden.

In US - 4 933 060 wird das Behandeln von Fluorpolymeren mit einem Gasplasma beschrieben, das aus Wasser oder einem flüchtigen nicht polymerisierenden Alkohol oder aus nicht polymerisierenden organischen Säuren besteht.

Zum Verbinden von Körpern aus miteinander unverträglichen Polymeren, einschließlich Fluorpolymere, sind Haftvermittler erforderlich. Diese Verfahren werden gelegentlich ebenfalls kleberfreie Verbindungen genannt, obwohl die eingesetzten Plasmapolymerschichten oder Pfropfcopolymere die Funktion des Klebers/Haftvermittlers übernehmen.

Das kleberfreie Verbinden von Körpern aus miteinander unverträglichen Polymern, beispielsweise aus Thermoplasten, Elastomeren und/oder Duromeren, nach Oberflächenbehandlung in einem elektrischen Plasma, wird in DE - 101010 25, beschrieben. Hier sind Körper aus Kunststoffen mit Mikrostrukturen einbezogen. Eine oder beide Oberflächen der zu verbindenden Körper werden unmittelbar vor dem Zusammenlegen mit einer Flüssigkeit benetzt, vorzugsweise mit einem Lösemittel, das sich zumindest zu einem der Kunststoffkörper kompatibel verhält. Dadurch können für eine gewisse Zeitspanne die zu verbindenden Körper gegeneinander verschoben und justiert werden, bevor die Haftung eintritt. Nach einer Plasmabehandlung werden die Körper zusammengepresst. Als Plasmagase werden Sauerstoff, Stickstoff und Argon eingesetzt, wobei die zu verbindenden Seiten der Körper dem gleichen Plasma ausgesetzt sind. Wie die Bedingungen bei der Plasmabehandlung an die speziellen chemischen Eigenschaften der in den beiden zu verbindenden Körpern vorliegenden Kunststoffe anzupassen sind, geht aus der Schrift nicht hervor. Die eingesetzten Plasmen sind zur Erzeugung chemischer Veränderungen nicht für alle Polymere gleich gut geeignet. Die Wirkung auf (teil)halogenierte oder (teil)fluorierte Kunststoffe ist an keiner Stelle erwähnt.

Bei Verbindungen mit halogenierten, insbesondere fluorierten Kunststoffen, wird keine annehmbare Haftfestigkeit der Verbindung erreicht, wenn Behandlungsbedingungen gewählt werden, die für Verbindungen aus nicht halogenierten Kunststoffen üblich sind. Bei halogenierten Kunststoffen, insbesondere fluorierten Kunststoffen, läßt sich die erforderliche Dichte funktioneller Gruppen nicht erreichen.

Der Erfindung liegt die Aufgabe zugrunde, ein Verfahren anzugeben, mit dem Körper aus miteinander unverträglichen - inkompatiblen - Kunststoffen verbunden werden können, und die Verbundkörper erhöhte Forderungen, insbesondere eine annehmbare Haftfestigkeit, erfüllen.

Die Aufgabe wird überraschenderweise gelöst durch ein Verfahren zum flächenartigen Verbinden von mindestens einem ersten und einem zweiten Körper aus Kunststoff. Mindestens einer dieser Körper besteht aus einem halogenierten Polymer. Die Halogene können bevorzugt Chlor oder Fluor sein. Das Polymer kann vollständig oder teilweise halogeniert sein. Jeweils eine Seite des ersten Körpers und eine Seite des zweiten Körpers werden mit einem elektrischen Plasma behandelt.
Das erfindungsgemäße Verfahren umfasst folgende Schritte:
- Die für das Verbinden der Körper vorgesehene Seite des ersten Körpers aus halogeniertem Polymer wird mit einem ersten und mit einem zweiten elektrischen Plasma in einem zweistufigen Prozess behandelt.
- Die im zweistufigen Prozess behandelte Seite des ersten Körpers wird mit einer Flüssigkeit behandelt.
- Die für das Verbinden der Körper vorgesehenen Seite des zweiten Körpers aus Kunststoff wird mit einem elektrischen Plasma in einem einstufigen Prozess behandelt.
- Die behandelte Seite des ersten Körpers wird mit der behandelten Seite des zweiten Körpers formschlüssig zusammengelegt.
- Die mindestens zwei zusammengelegten Körper werden zusammengepresst.
- Der Verbund aus beiden Körpern wird bei erhöhter Temperatur und erhöhtem Druck nachbehandelt.
   Der erste Körper aus halogeniertem Polymer wird in der ersten Stufe mit einem Plasmagas aus der Gruppe behandelt, die bevorzugt die Gase Wasserstoff, Argon und Ammoniak umfasst. Der erste Körper wird in der zweiten Stufe mit einem Plasmagas aus der Gruppe behandelt, die bevorzugt die Gase Wasserstoff, Stickstoff und Ammoniak umfasst. Das in der ersten Stufe angewendete Plasma wirkt chemisch reduzierend. Das in der zweiten Stufe angewendete Plasma erzeugt basisch reagierende Gruppen auf der Oberfläche des behandelten Körpers.
   Der zweite Körper aus Kunststoff wird einstufig mit einem Plasmagas aus der Gruppe behandelt, die bevorzugt die Gase Argon, Sauerstoff und Wasserdampf umfasst.
   Der erste Körper aus halogeniertem Polymer ist beispielsweise ein fluorierter oder teilfluorierter Körper.
   Der erste Körper aus einem fluorierten Polymer wird in der ersten Stufe mit einem Plasmagas behandelt, das bevorzugt besteht
- aus 100 % Wasserstoff, oder
- aus 3 bis 10 Vol.-% Wasserstoff und 97 bis 90 Vol.-% Argon, oder
- aus 3 bis 10 Vol.-% Ammoniak und 97 bis 90 Vol.-% Argon.
   Der erste Körper aus einem fluorierten Polymer wird in der zweiten Stufe mit einem Plasmagas behandelt, das bevorzugt besteht
- aus 100 % Ammoniak, oder
- aus 15 bis 30 Vol.-% Stickstoff und 85 bis 70 Vol.-% Wasserstoff.
   Der zweite Körper aus nicht halogeniertem Kunststoff wird einstufig mit einem Plasmagas behandelt, das bevorzugt besteht
- aus 100 % Argon, oder
- aus 100 % Sauerstoff, oder
- aus 100 % Wasserdampf, oder
- aus 90 bis 99 Vol.-% Argon und 10 bis 1 Vol.-% Wasserdampf, oder
- aus 90 bis 99 Vol.-% Argon und 10 bis 1 Vol.-% Sauerstoff.

Die Plasmabehandlung kann entweder mit einem gepulsten oder mit einem kontinuierlich angeregten Plasma durchgeführt werden. Die Anregungsfrequenz kann von 1 kHz bis 30 GHz betragen. Besonders geeignet ist eine Anregungsfrequenz, die im Mikrowellen-Bereich von 1 GHz bis 10 GHz (zum Beispiel 2,45 GHz) liegt, oder im Hochfrequenzbereich von 10 MHz bis 100 MHz, oder im Mittelfrequenzbereich von 10 kHz bis 50 kHz.

Das elektrische Plasma kann gepulst angeregt werden. Die Einschaltdauer des erregenden Feldes kann von 0,001 Sekunden bis 0,05 Sekunden betragen. Die Ausschaltdauer kann von 0,01 Sekunden bis 0,2 Sekunden betragen. Die Einschaltdauer während der Behandlung eines Körpers kann insgesamt von 0,5 Sekunden bis 10 Sekunden betragen.

Der oder die zu behandelnden Körper können dem aktiven oder dem abklingenden Plasma ausgesetzt werden. Das aktive Plasma wird vom anregenden Feld durchdrungen und absorbiert Feldenergie. Das abklingende Plasma schließt sich an das aktive Plasma an. Die zu behandelnden Körper werden bevorzugt im abklingenden Plasma angeordnet. Das Plasma wirkt im wesentlichen auf die Oberfläche des im Plasma behandelten Körpers. Es ist hinreichend, wenn das Plasma nur auf die für die Verbindung vorgesehene Fläche des behandelten Körpers wirkt.

Vor dem Einbringen des Körpers in das elektrische Plasma kann die zu behandelnde Oberfläche bereichsweise gasdicht abgedeckt werden. Dann wirkt das elektrische Plasma nur auf die nicht abgedeckten Bereiche. Zum Abdecken sind dünne Folien aus Kunststoff oder Metall geeignet. Die Folien können bereichsweise durchbrochen sein.

Der Druck des Plasmagases kann von 10 Pa bis 100 Pa betragen. Der Druck kann über den Gasfluß oder ein Butterfly-Ventil von Hand oder automatich geregelt werden. Ein Körper aus einem fluorierten Polymer kann im Plasmagas während einer Dauer von 0,5 Sekunden bis 30 Sekunden behandelt werden.

Ein Körper aus fluoriertem Polymer kann in zwei Stufen in einem Plasma behandelt werden, und zwar zuerst in einem Plasmagas aus Argon und Wasserstoff, und anschließend in einem Plasmagas aus Ammoniak. Die Einschaltdauer in der zweiten Stufe kann von 1 Sekunde bis 20 Sekunden betragen,

Es ist zweckmäßig, den Körper aus halogeniertem Polymer nach der (letzten) Behandlung in einem Plasma und vor dem Zusammenlegen mit einer Flüssigkeit zu besprühen, zum Beispiel mit Wasser. Dadurch wird die mit Plasma behandelte Fläche aktiviert.

Der im Plasma erfindungsgemäß behandelte erste Körper aus einem halogenierten Polymer kann direkt mit einem zweiten Körper aus nicht behandeltem halogenierten Polymer oder mit einem zweiten Körper aus einem halogenfreien Polymer zusammengelegt werden.

Der zweite Körper aus halogenfreiem Polymer kann unbehandelt sein, oder er kann ebenfalls in einem Plasma behandelt worden sein. Der zweite Körper aus halogenfreiem Polymer kann in einem Plasmagas aus Argon und Sauerstoff behandelt werden, wobei das Plasma bevorzugt gepulst angeregt wird. Diese Plasmagase erzeugen sauer reagierende Gruppen auf der behandelten Fläche.

Die beiden zu verbindenden Körper werden formschlüssig zusammengelegt. Die zu verbindenden Flächen können eben sein. Weiter können Körper verbunden werden, deren Verbindungsflächen in eine Ebene abrollbar sind, wie die Mantelfläche eines Zylinders oder eines Kegels oder eines Kegelstumpfes. Weiter können Körper mit gewölbten Flächen miteinander verbunden werden, wenn die Körper formschlüssig zusammenlegbar sind.

Die zu verbindenden Körper können sowohl als biegsame Folien oder als steife Körper vorliegen. Miteinander verbunden werden können zwei oder mehrere Folien, zwei oder mehrere steife Körper, sowie Folien und steife Körper in beliebiger Folge.

Die formschlüssig zusammengelegten (mindestens zwei) zu verbindenden Körper werden bei erhöhter Temperatur und unter Druck zusammengepresst. Die Temperatur liegt unterhalb der niedrigsten Glasübergangstemperatur eines im Verbundkörper vorhandenen Kunststoffs.

Die zu verbindenden Körper können mit einem Druck von 4 bar bis 12 bar zusammengepresst werden. Bei einer Behandlungstemperatur von 80 °C bis 120 °C während des Zusammenpressens kann die Pressdauer von 1 Minute bis 30 Minuten betragen.

Der Verbundkörper kann anschließend ohne Druck von 10 Minuten bis 120 Minuten bei 80 °C bis 120 °C im Trockenschrank nachbehandelt werden.

Biegsame Folien und steife Körper können beispielsweise aus Polyethylen (PE), Polypropylen (PP), Polystyrol (PS), Polycarbonat (PC), Polyethylenterephthalat (PET), cyclischem Olefin (Co)Polymer (COP und COC), Polyetheretherketon (PEEK), Polytetrafluorethylen (PTFE), Poly(perfluorvinylpropyloxyether) (PFA), Poly(tetrafluorethylen-co-hexafluorpropylen) (FEP) oder Polyvinylchlorid (PVC) bestehen, wobei ein Körper (teil)halogeniert ist. Die Verbindung von fluorierten Polymeren wie zum Beispiel PTFE, FEP oder PFA mit Folien und steifen Körpern aus zum Beispiel PP, PS, PC und COC, sind für die chemische und biologische Analytik von besonderer Bedeutung. (Teil)fluorierte Polymere sind gegenüber fast allen Chemikalien besonders beständig. Sie können als dünnste Folien bis hinab zu einer Dicke von etwa einem Mikrometer (1 µm) eingesetzt werden. In dieser Form haben sie hervorragende optische Eigenschaften sowie eine gute Gasdurchlässigkeit und gleichzeitig keine Flüssigkeitsdurchlässigkeit. Eine derartige Kombination von Eigenschaften ist bei vielen analytischen Anwendungen günstig. Deshalb sind haftfeste Fügungen von Körpern aus oder mit (teil)fluorierten Polymeren besonders wichtig.

Erfindungsgemäß können biegsame Folien mit steifen Körpern von unterschiedlicher Dicke verbunden werden. Steife Körper können miteinander verbunden werden, sofern sie flächige Passungen haben.

Die Fläche, in der ein steifer Körper mit einem zweiten steifen Körper oder mit einer biegsamen Folie verbunden werden soll, kann entweder eben sein oder - zum Beispiel zylinderförmig - gekrümmt sein. Im letzten Fall werden die beiden zu verbindenden steifen Körper in der Verbindungsfläche formschlüssig zusammengelegt.

Der nach dem erfindungsgemäßen Verfahren hergestellte Verbundkörper kann aus mehreren steifen Körpern, aus steifen Körpern und biegsamen Körpern oder aus mehreren biegsamen Körpern bestehen. Er kann für die biochemische Diagnostik, für mikrochemische oder mikrobiologische Untersuchungen oder zum Züchten und Untersuchen von lebenden Zellen verwendet werden.
Das erfindungsgemäße Verfahren und der damit hergestellte Verbundkörper haben folgende Vorteile:
- Ein Verbundkörper, dessen Verbindungsfläche erfindungsgemäß behandelt ist, hat bei Einwirkung eines Lösemittels eine hinreichende Haftfestigkeit und ist gegen Lösemittel hinreichend beständig.
- Die im Schälabzugsversuch ermittelte Haftfestigkeit der miteinander verbundenen Körper beträgt von 100 N/m bis 400 N/m; sie ist für eine technische Verwendung der Verbundkörper völlig hinreichend. Diese Haftfestigkeit kann über der Bruchfestigkeit eines der oder beider miteinander verbundenen Körper liegen.
- Die Verbindung ist gegenüber Lösemitteln einschließlich wässrigen salzhaltigen und proteinhaltigen Lösungen unter mechanischer Belastung beständig.
- Die Verbindung hält der vollständigen Befüllung von Reaktionsgefäßen (Kavitäten) mit Wasser oder alkoholischen Lösemitteln über mehrere Tage stand. Eine Spannungsrisskorrosion wurde nicht beobachtet.
- Die Haftfestigkeit wird durch eine Änderung des pH-Wertes herabgesetzt. Die Verbindung hält bei stark sauren (pH =1) und stark basischen (pH = 14) Flüssigkeiten einige Stunden.
- Bereits beim Zusammenlegen eines im elektrischen Plasma behandelten Körpers mit einem anderen Körper wird eine Haftfestigkeit erreicht, die das Verrutschen der Körper gegeneinander verhindert.
- Es können Verbundkörper aus Kunststoffen hergestellt werden, die an Forderungen bei der Durchführung und Auswertung von Untersuchungen angepasst sind.
- Die Oberfläche eines Körpers aus einem hydrophoben Polymer kann nach der Behandlung in einem elektrischen Plasma hydrophil werden. Auf derartigen Oberflächen können Zellkulturen gut anwachsen.
   Das erfindungsgemäße Verfahren kann verwendet werden zum flächenartigen Verbinden von mindestens zwei Körpern aus Kunststoff, von denen mindestens ein Körper aus einem halogenierten Polymer besteht, und mindestens einer der zu verbindenden Körper mikrostrukturiert ist, und die Mikrostruktur mindestens bereichsweise in der Verbindungsfläche liegt. Damit werden mikrostrukturierte Verbundkörper erhalten, die für mikrochemische oder mikrobiologische Untersuchungen verwendet werden können.
   Die Erfindung wird ohne Einschränkung des allgemeinen Erfindungsgedankens anhand der folgenden Beispiele weiter erläutert.

### Beispiel 1: Plättchen aus einem steifen Körper aus PC (Polycarbonat) mit einer Folie aus FEP (Poly-tetrafluorethylen-co-hexafluorpropylen)

Der steife Körper aus PC und die Folie aus FEP werden unterschiedlich behandelt. Die zu verbindende Seite des steifen Körpern aus PC wird mit einem Gemisch aus Sauerstoff (10 sccm) und Argon (100 sccm) als Plasmagas mittels eines bei 2,45 GHz arbeitenden Plasmagenerators gepulst behandelt (sccm = Standardkubikzentimeter pro Minute). Auf der Oberseite eines würfelförmigen Vakuumgefäßes mit 0,4 m Kantenlänge befindet sich ein Feldapplikator, der die Mikrowellenenergie über ein rundes Quarzfenster von etwa 0,3 m Durchmesser in das Plasma einkoppelt. Unmittelbar unterhalb dieses Fensters bildet sich ein aktives Plasma. Die zu behandelnden Körper werden im Abstand von etwa 11 cm zum Fenster im abklingenden Plasma angeordnet. Der Gasdruck wird auf 20 Pa und die eingespeiste Mikrowellenleistung auf 1200 W eingestellt und von Hand oder automatisch geregelt. Der Pulszyklus ist: 0,01 Sekunden eingeschaltet und 0,09 Sekunden ausgeschaltet. Die effektive Behandlungsdauer (Summe der Zeiten, in denen das erregende Feld eingeschaltet ist) beträgt 1 Sekunde.

Die biegsame Folie aus FEP wird in einem zweistufigen Plasmaprozess behandelt. In der ersten Stufe wird die Folie in einem kontinuierlich angeregten Mikrowellen-Plasma bei 2,45 GHz in einem Gasgemisch aus Wasserstoff (5 sccm) und Argon (50 sccm) 60 Sekunden lang bei 50 Pa behandelt. In der zweiten Stufe wird die Folie in einem kontinuierlich angeregten Mikrowellen-Plasma bei 2,45 GHz mit Ammoniak (40 sccm) als Plasmagas behandelt. Die Behandlungsdauer beträgt 5 Sekunden.

Die im Plasma behandelte Folie wird zunächst mit Wasser besprüht.

Der so vorbehandelte steife Körper und die vorbehandelte Folie werden bei 80 °C und einem Druck von 0,6 MPa (6 bar) zehn Minuten lang zusammengepresst. Anschließend wird der Verbundkörper ohne Druck für 30 Minuten im Trockenschrank bei 120 °C getrocknet.

Die Haftfestigkeit wird im Schälabzugsversuch gemessen. Für den in Beispiel 1 hergestellten Verbund aus einer 4 cm² großen und 4 mm dicken rechteckigen massiven Platte aus PC und einer 25 Mikrometer dicken Folie aus FEP hat sich eine Haftfestigkeit von 350 N/m ergeben. Die Haftfestigkeit dieses Verbundes bleibt gegenüber Wasser und Ethanol (96 %) mindestens 3 Tage unverändert, gegenüber 1 M Salzsäure bleibt sie etwa 5 h unverändert, und gegenüber 1 M Natronlauge bleibt sie etwa 2 h unverändert.

### Beispiel 2 : Plättchen aus drei übereinander liegenden Folien zum Handhaben und Beobachten flüssiger, insbesondere wässriger Mikroproben

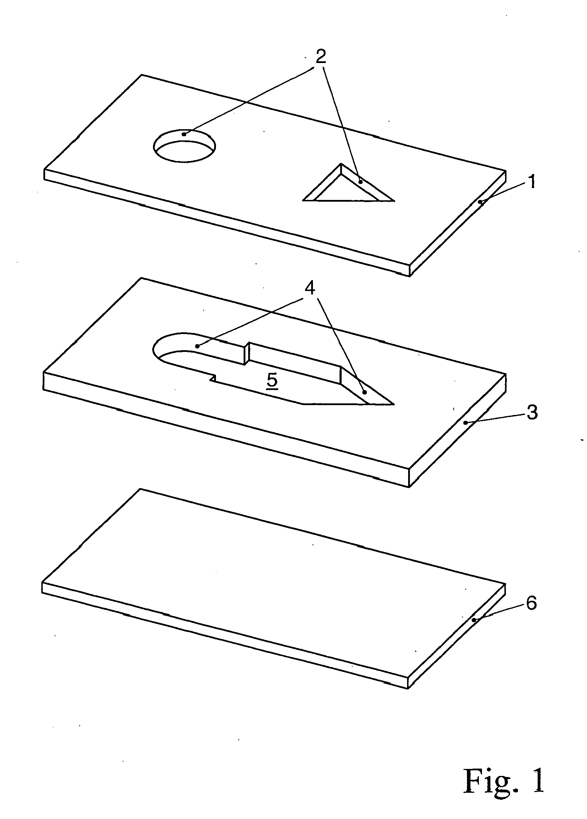

Das Plättchen ist in Figur 1 schematisch dargestellt. Es umfasst drei Schichten, die jeweils etwa 20 mm breit und etwa 40 mm lang sind.
- Die Deckschicht (1) besteht aus einer etwa 10 Mikrometer dicken Folie aus FEP (Polytetrafluorethylen-co-hexafluorethylen) mit zwei auf der Mittellinie der Folie im Abstand von 6 Millimetern angebrachten Löchern (2) mit jeweils 0,8 Millimeter Durchmesser. Die Löcher können gestanzt oder gebohrt sein. Die Form dieser drei Löcher ist fast beliebig; sie können rund, oval, mehreckig sein. Das eine Loch dient als Einfüllöffnung für die zu untersuchende Flüssigkeit, das andere Loch dient als Entlüftungsöffnung.
- Die Mittelschicht (3) ist eine etwa 60 Mikrometer dicke und steife Folie aus PC (Polycarbonat) mit einem länglichen gestanzten Durchbruch (4), der die beiden Löcher in der Deckschicht (1) miteinander verbindet, und der zwischen den beiden Löchern eine rechteckige Erweiterung (5) von 3 Millimeter Seitenlänge hat.
- Die Bodenschicht (6) ist eine etwa 10 Mikrometer dicke Folie aus FEP. Die Bodenschicht hat keine Löcher oder Durchbrüche und keine Mikrostrukturen.

Die Mittelschicht aus PC wird auf beiden Seiten in einem Plasmagas behandelt; die Verfahrensbedingungen und die Anordnung der Mittelschicht im Plasmagas stimmen mit den in Beispiel 1 für den steifen Körper angegebenen Verfahrensbedingungen und der Anordnung überein.

Die beiden Folien aus FEP werden gleichartig in einem zweistufigen Plasmaprozess einseitig behandelt. In der ersten Stufe wird die Folie in einem kontinuierlich angeregten Mikrowellen-Plasma bei 2,45 GHz in einem Gasgemisch aus Wasserstoff (5 sccm) und Argon (50 sccm) 60 Sekunden lang bei 50 Pa behandelt. In der zweiten Stufe wird die Folie in einem kontinuierlich angeregten Mikrowellen-Plasma bei 2,45 GHz mit Ammoniak (40 sccm) als Plasmagas behandelt. Die Behandlungsdauer beträgt 5 Sekunden.

Die im Plasma behandelten Folien aus FEP werden zunächst mit Wasser besprüht.

Die vorbehandelte Folie aus PC und beide Folien aus FEP werden formschlüssig zu einem Stapel zusammengelegt; dabei entsteht aus dem Durchbruch in der Folie aus PC eine flache Kammer, die durch die Löcher in der Deckschicht von außen zugänglich ist.

Der zusammengelegte Stapel wird bei 80 °C und einem Druck von 0,6 MPa (6 bar) zehn Minuten lang zusammengepresst. Anschließend wird der Stapel ohne Druck für 30 Minuten im Trockenschrank bei 120 °C behandelt.

Der fertige Stapel bildet ein dünnes steifes Plättchen. Die flache Kammer in diesem Plättchen kann durch eines der Löcher in der Deckfolie mit einem flüssigen Medium blasenfrei befüllt werden. Beim Befüllen entweicht die Luft in der Kammer durch das andere Loch in der Deckfolie. Auf diese Weise wird aus einer sehr geringen Menge der eingefüllten Flüssigkeit eine 60 Mikrometer dicke Flüssigkeitsschicht hergestellt. Die Flüssigkeitsschicht in dem befüllten Plättchen kann über längere Zeit visuell oder mikroskopisch beobachtet und analysiert werden. Der Flüssigkeitsverlust durch Verdunsten ist trotz der nicht abgedeckten Löcher in der Deckfolie sehr gering. Die Flüssigkeit wird durch Kapillarkraft in der Kammer gehalten und läuft beim Handhaben des Plättchens nicht heraus.

In einem derartigen Plättchen kann eine Zellrasen-Kultur aus einer sehr geringen Anzahl von lebenden Zellen angelegt werden, zum Beispiel aus 500 bis 5000 Zellen in etwa 0,05 Mikroliter bis 500 Mikroliter Flüssigkeit. Die Kammer in dem Plättchen kann mit einem derartigen Kulturmedium befüllt werden. Die hohe Durchlässigkeit der Folien aus FEP ermöglicht den Gasaustausch und die Versorgung der Zellen mit Sauerstoff. Die Zellen adhärieren an der im Ammoniak-Plasma behandelten Fläche der Folien aus FEP.

Nach eine Lagerung des Plättchens im Brutschrank kann das Verhalten der Zellen zum Beispiel im Fluoreszenz-Mikroskop beobachtet werden. Das Plättchen kann unter dem Mikroskop leicht gehandhabt werden. Die Kultur trocknet wegen der Einkapselung zwischen den Folien nicht aus. Wegen der geringen Dicke der Flüssigkeitsschicht und der vernachlässigbaren Eigenfluoreszenz der Folien aus FEP können die Zellkulturen bei sehr geringem Störlicht untersucht werden.

### Beispiel 3 : Stapel aus vier Schichten zum Handhaben und Beobachten mehrerer flüssiger Mikroproben

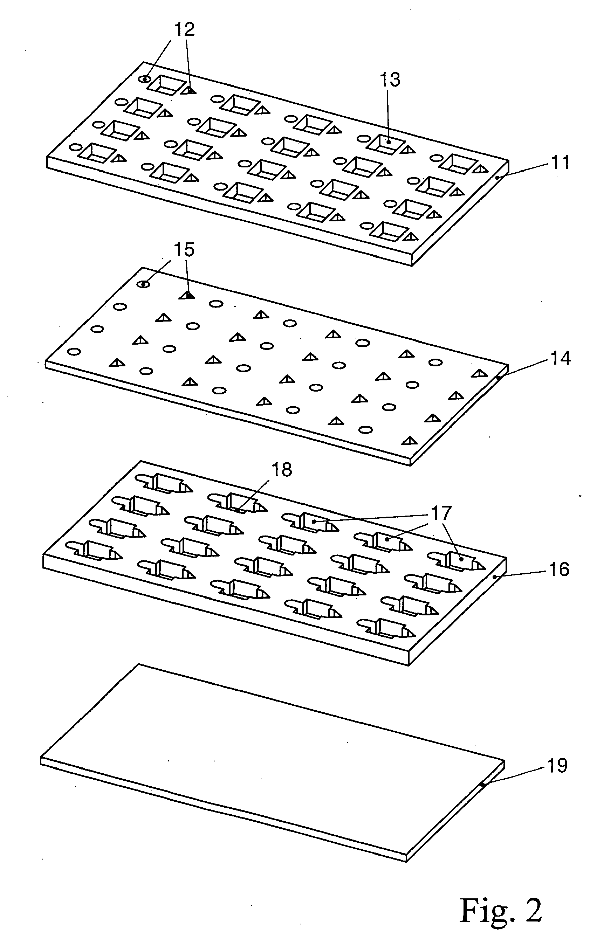

Der Stapel ist in Figur 2 schematisch dargestellt. Er umfasst vier Schichten, die jeweils etwa 30 mm breit und etwa 55 mm lang sind.
- Die erste (obere) Schicht (11) ist ein durchbrochener 2 mm dicker Formkörper aus PS (Polystyrol), der mit einer regelmäßigen (4 mal 5)-Anordnung von jeweils zwei im Abstand von 6 mm liegenden (gestanzten oder gebohrten) Löchern (12) von je 1 mm Durchmesser versehen ist. Zwischen je zwei Löchern liegt ein rechteckiges Loch (13) mit 3 mm Seitenlänge. Die Form dieser drei Löcher ist fast beliebig; sie können rund, oval, mehreckig sein.
- Die zweite Schicht (14) ist eine 20 Mikrometer dicke Folie aus FEP (Polytetrafluorethylen-co-hexafluorethylen), die mit einer regelmäßigen (4 mal 5)-Anordnung aus jeweils zwei im Abstand von 6 mm liegenden (gestanzten oder gebohrten) Löchern (15) von je 0,8 mm Durchmesser (oder Seitenlänge) versehen ist.
- Die dritte Schicht (16) ist eine 200 Mikrometer dicke Folie aus (gut stanzbarem) PC (Polycarbonat), die mit einer (4 mal 5)-Anordnung von länglichen (gestanzten) Durchbrüchen (17) versehen ist. Die Durchbrüche verbinden die Löcher der Lochpaare in der zweiten Schicht (14) miteinander. Jeder Durchbruch hat zwischen den Löchern eine rechteckige Erweiterung (18) von 3 mm Seitenlänge.
- Die vierte (untere) Schicht (19) ist eine 20 Mikrometer dicke Folie aus FEP.

Wegen der Anordnung der Löcher in der ersten und der zweiten Schicht sowie der gestanzten Durchbrüche in der dritten Schicht ist jedes Loch in der zweiten Schicht und jede Erweiterung der Durchbrüche in der dritten Schicht voneinander getrennt und von oben frei zugänglich.

Die Unterseite des durchbrochenen Formkörpers aus PS (erste Schicht) sowie die Oberseite und die Unterseite der Folie aus PC (dritte Schicht) werden in einem Plasmagas behandelt; die Verfahrensbedingungen und die Anordnung der Schicht aus PC stimmen mit den in Beispiel 1 für den steifen Körper angegebenen Verfahrensbedingungen und der Anordnung überein.

Die beiden Folien aus FEP werden gleichartig in einem zweistufigen Plasmaprozess behandelt. In der ersten Stufe wird die Folie in einem kontinuierlich angeregten Mikrowellen-Plasma bei 2,45 GHz in einem Plasmagas aus Wasserstoff (5 sccm) und Argon (50 sccm) 60 Sekunden lang bei 50 Pa behandelt. In der zweiten Stufe wird die Folie in einem kontinuierlich angeregten Mikrowellen-Plasma bei 2,45 GHz mit Ammoniak (40 sccm) als Plasmagas behandelt. Die Behandlungsdauer beträgt 5 Sekunden.

Die Folie für die zweite Schicht wird zunächst nur auf der Seite im Plasma behandelt, die im Stapel der dritten Schicht zugewandt ist.

Die Folie für die vierte Schicht wird nur auf der Seite im Plasma behandelt, die im Stapel der dritten Schicht zugewandt ist.

Die Folie für die zweite Schicht und die Folie für die vierte Schicht werden auf den im Plasma behandelten Seiten mit Wasser besprüht.

Die Folie für die zweite Schicht und die Folie für die vierte Schicht werden mit ihren im Plasma behandelten Seiten mit der behandelten Folie für die dritte Schicht formschlüssig gestapelt. Aus den Durchbrüchen in der Folie für die dritte Schicht entsteht eine Anordnung von flachen Kammern, die durch die Löcher in der Deckschicht von oben zugänglich sind. Der zusammengelegte Stapel wird bei 80 °C und einem Druck von 0,6 MPa (6 bar) zehn Minuten lang zusammengepresst. Anschließend wird der Stapel ohne Druck für 30 Minuten im Trockenschrank bei 120 °C behandelt.

Dieser dreischichtige Stapel ist wegen der Durchbrüche mechanisch empfindlich und kann in dieser Form kaum verwendet werden. Er wird mittels des mit Durchbrüchen versehenen Formkörpers für die erste Schicht stabilisiert. Dazu wird die Oberseite des dreischichtigen Stapels, also die Seite der Folie für die zweite Schicht, die dem Formkörper für die erste Schicht zugekehrt ist, in dem oben beschriebenen zweistufigen Plasmaprozess (in der ersten Stufe in einem Plasma aus Wasserstoff und Argon und in der zweiten Stufe in einem Plasma aus Ammoniak) unter den oben angegebenen Bedingungen behandelt.

Die behandelte Seite des dreischichtigen Stapels wird mit Wasser besprüht.

Auf den behandelten dreischichtigen Stapel wird der durchbrochene Formkörper für die erste Schicht formschlüssig aufgelegt. Beide Teile werden bei 60 °C und einem Druck von 0,6 MPa (6 bar) zehn Minuten lang zusammengepresst. Anschließend wird der vierschichtige Stapel ohne Druck für 60 Minuten bei 60 °C im Trockenschrank behandelt.

Die flachen Kammern im vierschichtigen Stapel können durch die Löcher im Formkörper für die erste Schicht und durch die Löcher in der Folie für die zweite Schicht hindurch mit einer Flüssigkeit blasenfrei befüllt werden. Damit können Zellkulturen mit sehr kleinen Zellzahlen (zum Beispiel 500 bis 5000 Zellen pro Kammer) und mit sehr kleinen Flüssigkeitsmengen angelegt werden und untersucht werden. Die Flüssigkeitsmenge zum Füllen einer Kammer in der Folie der dritten Schicht beträgt etwa 1 Mikroliter.

Die flachen Kammern können mit einem zellhaltigen Kulturmedium befüllt werden. Die Zellen adhärieren an den im Ammoniak-Plasma behandelten Folien aus FEP. Nach einer Lagerung für 24 Stunden im Brutschrank kann das Kulturmedium gewechselt werden. Dabei können den einzelnen Kammern Medien unterschiedlicher Zusammensetzung zugeführt werden. Die Wirkung von unterschiedlichen Medien auf die Zellen kann fluoreszenzmikroskopisch beobachtet werden.

## Patentansprüche

1. Verfahren zum flächenartigen Verbinden von mindestens einem ersten und einem zweiten Körper aus Kunststoff, von denen mindestens ein Körper aus einem halogenierten Polymer besteht, und jeweils eine Seite des ersten Körpers und eine Seite des zweiten Körpers mit einem elektrischen Plasma behandelt wird, **gekennzeichnet durch**
• Behandeln der für das Verbinden der Körper vorgesehenen Seite des ersten Körpers aus halogeniertem Polymer mit einem ersten und mit einem zweiten elektrischen Plasma in einem zweistufigen Prozess, und
• Behandeln der im zweistufigen Prozess behandelten Seite des ersten Körpers mit einer Flüssigkeit, und
• Behandeln der für das Verbinden der Körper vorgesehenen Seite des zweiten Körpers aus Kunststoff mit einem elektrischen Plasma, und
• formschlüssiges Zusammenlegen der behandelten Seite des ersten Körpers mit der behandelten Seite des zweiten Körpers, und
• Nachbehandeln des Verbundes aus beiden Körpern bei erhöhter Temperatur und erhöhtem Druck.

2. Verfahren nach Anspruch 1, **gekennzeichnet durch**
• Behandeln des ersten Körpers aus halogeniertem Polymer in der ersten Stufe mit einem Plasmagas aus der Gruppe, die die Gase Wasserstoff, Argon und Ammoniak umfasst.

3. Verfahren nach den Ansprüchen 1 und 2, **gekennzeichnet durch**
• Behandeln des ersten Körpers aus halogeniertem Polymer in der zweiten Stufe mit einem Plasmagas aus der Gruppe, die die Gase Wasserstoff, Stickstoff und Ammoniak umfasst.

4. Verfahren nach Anspruch 1, **gekennzeichnet durch**
• Behandeln des zweiten Körpers aus Kunststoff mit einem Plasmagas aus der Gruppe, die die Gase Argon, Sauerstoff und Wasserdampf umfasst.

5. Verfahren nach Anspruch 1, **gekennzeichnet durch**
• Verwenden eines (teil)fluorierten Körpers als ersten Körper aus halogeniertem Polymer.

6. Verfahren nach den Ansprüchen 1, 2 und 5, **gekennzeichnet durch**
• Behandeln des ersten Körpers aus einem fluorierten Polymer in der ersten Stufe mit Plasmagas aus 100 % Wasserstoff.

7. Verfahren nach den Ansprüchen 1, 2 und 5, **gekennzeichnet durch**
• Behandeln des ersten Körpers aus einem fluorierten Polymer in der ersten Stufe mit Plasmagas, das aus 3 bis 10 Vol.-% Wasserstoff und 97 bis 90 Vol.-% Argon besteht.

8. Verfahren nach den Ansprüchen 1, 2 und 5, **gekennzeichnet durch**
• Behandeln des ersten Körpers aus einem fluorierten Polymer in der ersten Stufe mit Plasmagas, das aus 3 bis 10 Vol.-% Ammoniak und 97 bis 90 Vol.-% Argon besteht.

9. Verfahren nach den Ansprüchen 1, 2 und 5, **gekennzeichnet durch**
• Behandeln des ersten Körpers aus einem fluorierten Polymer in der zweiten Stufe mit Plasmagas aus 100 % Ammoniak.

10. Verfahren nach den Ansprüchen 1, 2 und 5, **gekennzeichnet durch**
• Behandeln des ersten Körpers aus einem fluorierten Polymer in der zweiten Stufe mit Plasmagas, das aus 15 bis 30 Vol.-% Stickstoff und 85 bis 70 Vol.-% Wasserstoff besteht.

11. Verfahren nach den Ansprüchen 1 und 4, **gekennzeichnet durch**
• Behandeln des zweiten Körpers aus nicht halogeniertem Polymer mit Plasmagas aus 100 % Argon.

12. Verfahren nach den Ansprüchen 1 und 4, **gekennzeichnet durch**
• Behandeln des zweiten Körpers aus nicht halogeniertem Polymer mit Plasmagas aus 100 % Sauerstoff.

13. Verfahren nach den Ansprüchen 1 und 4, **gekennzeichnet durch**
• Behandeln des zweiten Körpers aus nicht halogeniertem Polymer mit Plasmagas aus 100 % Wasserdampf.

14. Verfahren nach den Ansprüchen 1 und 4, **gekennzeichnet durch**
• Behandeln des zweiten Körpers aus nicht halogeniertem Polymer mit Plasmagas, das aus 90 bis 99 Vol.% Argon und 10 bis 1 Vol.-% Wasserdampf besteht.

15. Verfahren nach den Ansprüchen 1 und 4, **gekennzeichnet durch**
• Behandeln des zweiten Körpers aus nicht halogeniertem Polymer mit Plasmagas, das aus 90 bis 99 Vol.-% Argon und 10 bis 1 Vol.% Sauerstoff besteht.

16. Verfahren nach Anspruch 1, **gekennzeichnet durch**
• Verwenden eines kontinuierlich angeregten elektrischen Plasmas mit einer Anregungsfrequenz von 1 kHz bis 30 GHz, bevorzugt 2,45 GHz.

17. Verfahren nach Anspruch 1, **gekennzeichnet durch**
• Verwenden eines gepulst angeregten elektrischen Plasmas mit einer Einschaltdauer von 0,001 bis 0,05 Sekunden, mit einer Ausschaltdauer von 0,01 bis 0,2 Sekunden, und mit einer Gesamt-Einschaltdauer von 0,5 bis 10 Sekunden.

18. Verfahren nach Anspruch 1, **gekennzeichnet durch**
• einen Druck des Plasmagases von 10 Pa bis 100 Pa.

19. Verfahren nach Anspruch 1, **gekennzeichnet durch**
• Behandeln des ersten Körpers aus einem fluorierten Polymer während einer Dauer von 0,5 bis 30 Sekunden im Plasma.

20. Verfahren nach Anspruch 1, **gekennzeichnet durch**
• Besprühen der mit einem Plasma behandelten Verbindungsfläche des mindestens einen Körpers aus einem fluorierten Polymer mit Wasser vor dem Zusammenpressen der Körper.

21. Verfahren nach Anspruch 1, **gekennzeichnet durch**
• formschlüssiges Zusammenlegen von mindestens zwei Körpern, deren Verbindungsflächen eben sind.

22. Verfahren nach Anspruch 1, **gekennzeichnet durch**
• formschlüssiges Zusammenlegen von mindestens zwei Körpern, deren Verbindungsflächen in eine ebene Fläche abrollbar sind.

23. Verfahren nach Anspruch 1, **gekennzeichnet durch**
• flächenartiges Verbinden von mindestens zwei Körpern aus Kunststoff, von denen mindestens ein Körper aus einem halogenierten Polymer besteht, und mindestens einer der zu verbindenden Körper mikrostrukturiert ist, und die Mikrostruktur mindestens bereichsweise in der Verbindungsfläche liegt.

24. Verwendung des Verfahrens nach einem der Ansprüche 1 bis 23 zum Herstellen eines
• Verbundkörpers, der Mikrostrukturen enthält, und der für mikrochemische oder mikrobiologische Untersuchungen geeignet ist.
